# FASCICULE DE BREVET EUROPEEN

(11) **EP 4 327 164 B1**
(45) Date de publication et mention de la délivrance du brevet: **02.09.2026**
(21) Numéro de dépôt: 22723116.4
(22) Date de dépôt: 14.04.2022
(51) Int. Cl.: G04B 1/14, G04B 13/02, G04B 15/14, G04B 17/06, G04B 31/08, G04B 43/00, B23K 26/0622, B23K 26/38, B23K 26/402

(54) **COMPOSANT HORLOGER ET PROCEDE DE FABRICATION D'UN TEL COMPOSANT HORLOGER**
UHRWERKSKOMPONENTE UND VERFAHREN ZUR HERSTELLUNG EINER SOLCHEN UHRWERKSKOMPONENTE
TIMEPIECE COMPONENT AND METHOD FOR MANUFACTURING SUCH A TIMEPIECE COMPONENT

(30) Priorité: 20.04.2021 EP 21169379
(43) Date de publication de la demande: 28.02.2024
(60) Demande divisionnaire: 26195157.8
(73) Titulaire: Acrotec R&D SA, 2017 Boudry (CH)
(72) Inventeur: JACOT, Philippe, 2022 Bevaix (CH); CALDERON, Ivan, 2014 Bole (CH)
(74) Mandataire: Bovard SA Neuchâtel
(86) Numéro de dépôt international: PCT/EP2022/060144
(87) Numéro de publication internationale: WO 2022/223477

(56) Documents cités:
- WO-A1-2019/079800
- CH-A1- 716 331
- FR-A- 1 470 503
- FR-A1- 2 322 113
- JP-A- S50 104 058

## Description

### Domaine technique

La présente invention concerne un composant horloger comprenant au moins une partie réalisée en carbure de silicium.

La présente invention concerne également un mouvement horloger et une pièce d'horlogerie comprenant un tel composant horloger.

La présente invention concerne également un procédé de fabrication d'un tel composant horloger.

### Etat de la technique

De tels composants horlogers comprenant une partie réalisée en carbure de silicium ont été développés dans les dernières années. Notamment, le carbure de silicium a été proposé pour réaliser des axes de pivotement horlogers, et plus particulièrement des axes de balancier, en raison de ses propriétés amagnétiques, pour remplacer les axes de pivotements traditionnels, réalisés en acier.

La fabrication d'un axe de pivotement horloger traditionnel en acier consiste, à partir d'une barre en acier trempable, à réaliser des opérations de décolletage de précision pour définir différentes surfaces actives (portée, épaulement, pivots etc.) puis à soumettre l'axe décolleté à des opérations de traitement thermique comprenant au moins une trempe pour améliorer la dureté de l'axe et un ou plusieurs revenus pour en améliorer la ténacité. Les opérations de traitements thermiques sont suivies d'une opération de roulage des pivots des axes, opération qui consiste à polir les pivots pour les amener aux dimensions requises. Au cours de cette opération de roulage, la dureté ainsi que la rugosité des pivots sont encore améliorées via un écrouissage de surface. On obtient ainsi, en fin de processus, un axe présentant des pivots aux dimensions, dureté et rugosité requises. Il est à noter que le roulage peut difficilement être mis en œuvre avec des matériaux dont la dureté est supérieure à 600 HV.

Les axes de pivotement horlogers, et notamment les axes de précision tels que les axes de balancier, utilisés classiquement dans les mouvements d'horlogerie mécaniques, sont réalisés dans des nuances d'aciers de décolletage qui sont généralement des aciers martensitiques au carbone incluant du plomb et des sulfures de manganèse pour améliorer leur usinabilité. Un acier de ce type connu, désigné 20 AP, est typiquement utilisé pour ces applications. Des alternatives sans plomb comme la nuance Finemac sont aussi utilisées.

Ce type de matériau a l'avantage d'être facilement usinable, en particulier d'être apte au décolletage et présente, après des traitements de trempe et de revenu adéquats, des propriétés mécaniques élevées très intéressantes pour la réalisation d'axes de pivotement horlogers. Ces aciers présentent en particulier une résistance à l'usure et une dureté après traitement thermique élevées. Typiquement la dureté des pivots d'un axe réalisé en acier 20 AP peut atteindre une dureté de surface dépassant les 700 HV après traitement thermique et roulage.

Bien que fournissant des propriétés mécaniques satisfaisantes pour les applications horlogères décrites ci-dessus, ce type de matériau présente l'inconvénient d'être magnétique et de pouvoir perturber la marche d'une montre après avoir été soumis à un champ magnétique, et ce notamment lorsque ce matériau est utilisé pour la réalisation d'un axe de balancier coopérant avec un balancier spiral en matériau ferromagnétique. On notera également que ces aciers martensitiques sont également sensibles à la corrosion.

Pour tenter de remédier à ces inconvénients, une solution a été proposée, consistant à utiliser des aciers inoxydables austénitiques qui présentent la particularité d'être amagnétiques, c'est-à-dire du type paramagnétique, diamagnétique ou antiferromagnétique, dont la perméabilité magnétique relative est inférieure ou égale à 1.01.

Toutefois, ces aciers austénitiques présentent une structure cristallographique ne permettant pas de les tremper et d'atteindre des duretés et donc des résistances à l'usure compatibles avec les exigences requises pour la réalisation d'axes de pivotement horlogers. Un moyen d'augmenter la dureté de ces aciers est l'écrouissage, toutefois cette opération de durcissement ne permet pas d'obtenir des duretés supérieures à 500 HV pour ce type de matériau. Par conséquent, dans le cadre de pièces nécessitant une grande résistance à l'usure par frottement et devant avoir des pivots ne présentant pas ou peu de risques de casse ou de déformation, l'utilisation de ce type d'aciers reste limitée.

Une autre solution proposée a consisté à déposer sur les axes de pivotement des couches dures de matériaux tels que le carbone amorphe connu sous la dénomination anglaise «diamond like carbon» (DLC). Or, on a constaté des risques importants de délamination de la couche dure et donc la formation de débris qui peuvent circuler à l'intérieur du mouvement horloger et venir perturber le fonctionnement de ce dernier, ce qui n'est pas satisfaisant.

Une autre approche a été envisagée pour remédier aux inconvénients des aciers inoxydables austénitiques, à savoir le durcissement superficiel de ces axes de pivotement par nitruration, carburation ou nitrocarburation. Toutefois ces traitements sont connus pour entraîner une perte importante de la résistance à la corrosion en raison de la réaction de l'azote et/ou du carbone avec le chrome de l'acier et la formation de nitrure de chrome et/ou de carbure de chrome causant un appauvrissement localisé de la matrice en chrome, ce qui est préjudiciable pour l'application horlogère souhaitée.

Une opération supplémentaire de dépôt de Ni chimique semble nécessaire afin de pallier ces problèmes de corrosion, ce qui complique et renchérit fortement le processus de fabrication.

D'autres approches existent encore, comme les réalisations en alliages de titane, métal dur, certains oxydes, ou céramiques telles que le carbure de silicium comme décrit ci-dessus. Toutefois l'utilisation de ces matériaux ne permet pas d'obtenir des performances satisfaisantes propres aux composants horlogers, autres que l'amagnétisme.

Pour le cas où le composant horloger est une pierre d'horlogerie, traditionnellement réalisée à partir de corindon, sous forme de saphir ou de rubis, ou le plus souvent à partir de rubis synthétique, il a été proposé dans le brevet FR 2322113 de remplacer le rubis très coûteux par du carbure de silicium fritté enrichi de 3 à 4% en poids en carbure de bore pour augmenter la dureté. Le carbure de bore forme du graphène à environ 1700°C alors que le carbure de silicium forme du graphène à environ 2100°C. Il y a donc des risques de contamination du graphène par le bore ou par le silicium lui-même ou bien une contamination croisée ou bien pas de formation du tout de graphène.

Le brevet FR 1470503 décrit un procédé de fabrication d'éléments de machine de précision, tels que des roues d'engrenage pour des instruments de précisions, en carbure de silicium polycristallin. Ce procédé comprend le dépôt de carbure de silicium par précipitation sur un support qui doit posséder un coefficient de dilatation thermique analogue à celui du carbure de titane et capable de résister à des hautes températures. Le support est ensuite détaché du carbure de silicium. Le carbure de silicium étant formé par un dépôt par précipitation, un tel dépôt risque de ne pas être conforme (présence de bulles d'air, non uniformité, etc.) de sorte que les composants réalisés avec ce procédé risquent de ne pas avoir les qualités requises pour le domaine horloger.

La demande WO 2019/079800 décrit un film de carbone ultra-dur pour des applications concernant l'aérospatiale, la défense, et les revêtements de protection tels que les blindages contre les balles. Selon l'enseignement de cette demande, il est prévu de réaliser tout d'abord un film de graphène et de le compresser sur un substrat en carbure de silicium en appliquant une pression comprise entre 1 GPa et 10 GPa. Ce procédé n'est pas du tout compatible avec la production de composant horloger.

On connait aussi de la demande CH 716331 l'utilisation d'un revêtement d'une ou plusieurs couches de graphène déposées par projection à froid de micro ou nanoparticules sur au moins un pivot d'un axe horloger en acier. Une des difficultés pour l'ensemble acier/graphène est la différence de coefficients de dilatation thermique et la qualité de l'adhésion du graphène avec l'acier entrainant un risque de délamination de la couche de graphène.

La présente invention vise à remédier à ces inconvénients en proposant un composant horloger, et plus particulièrement un axe de pivotement amagnétique, présentant les propriétés mécaniques compatibles avec les exigences de résistance à l'usure et aux chocs requises dans le domaine horloger, mais également limitant la sensibilité aux champs magnétiques.

Un autre but de l'invention est de proposer un procédé de fabrication d'un tel composant horloger, notamment un axe de pivotement amagnétique, et plus particulièrement un axe de précision, permettant une réalisation extrêmement simple et économique.

### Divulgation de l'invention

A cet effet, l'invention concerne un composant horloger comprenant au moins une partie constituée de carbure de silicium, la surface externe de ladite partie constituée de carbure de silicium étant recouverte d'au moins une couche de graphène.

Selon l'invention, ladite partie présente une rugosité Ra inférieure ou égale à 0.5 µm ± 20%, et de préférence inférieure ou égale à 0.1 µm, de préférence inférieure ou égale à 50 nm, de préférence inférieure ou égale à 25 nm, de préférence inférieure ou égale à 15 nm, et préférentiellement inférieure ou égale à 12 nm, plus préférentiellement inférieure ou égale à 10 nm, et plus préférentiellement comprise entre 5 nm et 9 nm, bornes incluses.

D'une manière particulièrement avantageuse, le composant horloger est constitué entièrement de carbure de silicium, la surface externe dudit composant horloger étant recouverte d'au moins une couche de graphène.

Avantageusement, ledit composant horloger est agencé pour former un axe de pivotement, de préférence un axe de balancier, la partie constituée de carbure de silicium recouverte d'au moins une couche de graphène de l'axe de pivotement étant agencée pour former un pivot prévu à au moins une extrémité dudit axe de pivotement.

Ainsi, la dureté de surface de ladite partie du composant horloger selon l'invention, et notamment la dureté des pivots, est celle du carbure de silicium, atteignant et même dépassant des valeurs de 2000 HV.

De plus, l'utilisation d'au moins une couche de graphène à la surface de ladite partie permet de grandement améliorer les propriétés de rigidité et la limite élastique du composant horloger selon l'invention, par rapport à un composant horloger connu.

En outre, le coefficient de frottement dynamique du graphène étant très faible, ladite partie, et notamment le pivot, peut présenter un coefficient de frottement dynamique inférieur ou égal à 0.2 sans lubrification.

De plus, le carbure de silicium est amagnétique et le graphène présente une grande résistance à la corrosion.

De ce fait, dans le cas d'un axe de pivotement, toutes les performances d'un axe de pivotement amagnétique actuel se trouvent améliorées.

La présente invention concerne également un mouvement horloger et une pièce d'horlogerie comprenant un composant horloger tel que défini ci-dessus.

La présente invention concerne également un procédé de fabrication d'un composant horloger comprenant au moins une partie constituée de carbure de silicium, la surface externe de ladite partie étant recouverte d'au moins une couche de graphène, ledit procédé comprenant :
a) une étape de fabrication d'une pièce brute du composant horloger comprenant au moins une partie constituée de carbure de silicium ;
b) une étape de réalisation d'une ébauche du composant horloger comprenant au moins une partie constituée de carbure de silicium au moins par usinage de la pièce brute obtenue à l'étape a) ;
c) une étape de finition par usinage de précision sans force au moins de la partie constituée de carbure de silicium afin d'obtenir au moins une partie constituée de carbure de silicium finie; et
d) une étape de formation d'au moins une couche de graphène sur la surface externe d'au moins la partie constituée de carbure de silicium finie obtenue à l'étape c).

Le procédé selon l'invention permet de diminuer notablement le temps de production et de réduire le nombre d'opérations nécessaires pour la fabrication d'un composant horloger, et notamment un axe de pivotement, réalisé dans un matériau amagnétique tout en présentant les propriétés mécaniques compatibles avec les exigences de résistance à l'usure et aux chocs requises dans le domaine horloger, par comparaison avec les composants horlogers fabriqués traditionnellement à partir de différents alliages métalliques. De façon remarquable, le procédé selon l'invention permet d'éviter les opérations de roulage ou autre opération de finition entre les étapes c) et d), ou après l'étape d).

### Brève description des dessins

D'autres caractéristiques et avantages de la présente invention apparaîtront à la lecture de la description détaillée suivante d'un mode de réalisation de l'invention, donné à titre d'exemple non limitatif, et faite en référence aux dessins annexés dans lesquels :
- la figure 1 est une vue schématisée d'un pivot d'un axe de pivotement selon l'invention; et
- la figure 2 est une représentation schématique des étapes d'un procédé selon l'invention.

### Modes de réalisation de l'invention

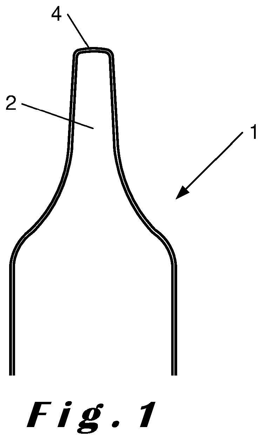

En référence à la figure 1, la présente invention concerne un composant horloger 1 comprenant au moins une partie 2 constituée de carbure de silicium, c'est-à-dire intégralement en carbure de silicium.

Selon l'invention, la surface externe de ladite partie 2 est recouverte d'au moins une couche de graphène 4. Ainsi, la partie 2 comprend un cœur de carbure de silicium et au moins une couche de graphène 4 extérieure, de préférence directement au contact du cœur de carbure de silicium.

Avantageusement, le composant horloger est constitué entièrement de carbure de silicium, toute sa surface externe étant alors entièrement recouverte d'au moins une couche de graphène. Le carbure de silicium étant amagnétique, le composant horloger selon l'invention présente alors l'avantage d'être amagnétique afin de limiter sa sensibilité aux champs magnétiques.

Un tel composant horloger est par exemple un axe de pivotement, un mobile, un ressort, notamment un ressort spiral.

Avantageusement, la partie 2 présente une surface de révolution, telle qu'une surface cylindrique ou conique.

D'une manière avantageuse, ledit composant horloger 1 est agencé pour former un axe de pivotement horloger. Dans ce cas, ladite partie 2 de l'axe de pivotement, constituée de carbure de silicium recouverte d'au moins une couche de graphène, est agencée pour former un pivot prévu à au moins une extrémité dudit axe de pivotement. Ces pivots sont destinés à venir chacun pivoter dans un palier, typiquement dans un orifice d'une pierre ou rubis.

Ladite partie 2, notamment lorsqu'elle se présente sous la forme d'un pivot, présente un diamètre extérieur inférieur ou égal à 200 µm, de préférence inférieur ou égal à 100 µm, préférentiellement inférieur ou égal à 90 µm, et plus préférentiellement inférieur ou égal à 70 µm.

De préférence, l'axe de pivotement horloger est un axe de balancier, comportant une pluralité de sections de diamètres différents, définissant classiquement des portées et des épaulements arrangés le long d'un tigeron entre deux portions d'extrémité définissant les deux pivots, une seule extrémité étant représentée ici sur la figure 1. Bien évidemment, d'autres types d'axes de pivotement horlogers sont envisageables comme par exemple des axes de mobiles horlogers, typiquement des pignons d'échappement, ou encore des tiges d'ancre. Les pièces de ce type présentent au niveau du corps des diamètres inférieurs de préférence à 2 mm, et des pivots de diamètre inférieur de préférence à 0.2 mm comme décrit ci-dessus, avec une précision de quelques microns.

De préférence, l'ensemble de l'axe de pivotement est réalisé intégralement en carbure de silicium recouvert de graphène. Toutefois, la partie 2 en carbure de silicium recouvert de graphène peut être limitée au pivot et au tigeron.

L'invention est décrite ici dans le cadre d'une application à un axe de pivotement dans lequel au moins le pivot constitue la partie 2, mais il est précisé que toute la suite de la description s'applique à tout composant horloger selon l'invention.

Le carbure de silicium est polycristallin ou monocristallin, sans autre élément ajouté, à l'exception des inévitables impuretés. En effet, de tels éléments ajoutés sont notamment susceptibles de nuire à une génération correcte du graphène épitaxial natif, voire même d'empêcher la génération de graphène épitaxial natif. De préférence, le carbure de silicium utilisé dans l'invention est monocristallin.

Selon les variantes, il est possible d'avoir une ou plusieurs couches de graphène 4.

D'une manière particulièrement préférée, la couche de graphène 4 est une couche de graphène natif qui a été obtenue par croissance de graphène épitaxial natif par sublimation du carbure de silicium. Des détails sur le procédé seront donnés ci-dessous. Ce graphène natif va constituer une peau ou couche qui va recouvrir toute la surface de la partie 2 en carbure de silicium. Ce graphène va contribuer à améliorer les propriétés du carbure de silicium, avec des propriétés mécaniques extrêmement élevées, en permettant par exemple d'obtenir un meilleur coefficient de friction, et d'augmenter les propriétés de rigidité ainsi que la contrainte élastique maximum admissible. L'adhérence d'une telle couche de graphène épitaxial natif sur le carbure de silicium est excellente, sans aucun risque de délamination.

Le graphène épitaxial natif, généré par sublimation du carbure de silicium, peut se distinguer du graphène obtenu par d'autres procédés, tels que par dépôt d'un revêtement, par une plus faible mobilité de porteurs de charge.

Plus particulièrement, la couche de graphène épitaxial natif 16 a une mobilité de porteurs de charge inférieure à 5000 cm² V-1 s-1, ce qui permet de la distinguer d'un revêtement de graphène obtenu par dépôt.

La couche de graphène épitaxial natif peut également se distinguer d'une couche de graphène obtenue par dépôt par spectroscopie Raman.

La couche de graphène épitaxial natif se distingue également d'une couche de graphène obtenue par dépôt par CVD par exemple par une meilleure adhérence.

La couche de graphène 4 peut également être une couche de graphène déposée qui a été obtenue par un dépôt « externe » de graphène, de préférence directement sur le carbure de silicium ou sur une autre couche de graphène déjà présente.

Les deux variantes peuvent être combinées de sorte qu'il est possible de prévoir au moins une couche de graphène natif à la surface d'au moins la partie 2, et au moins une couche de graphène déposée sur ladite couche de graphène natif.

De préférence, la couche de graphène 4 présente une épaisseur comprise entre 0.5 nm et 20 nm, de préférence entre 1 nm et 10 nm, et préférentiellement entre 1 nm et 5 nm, bornes incluses.

D'une manière particulièrement avantageuse, la partie 2, et de préférence tout le composant horloger 1, selon l'invention, présente une dureté de surface supérieure ou égale à 2000 HV, et de préférence supérieure ou égale à 2500 HV, du fait de l'utilisation de carbure de silicium. Les méthodes d'essais de dureté Vickers sont définies dans les normes suivantes ASTM C1327 et ISO 6507.

Selon l'invention telle que définie dans la revendication 10 annexée, la partie 2, et de préférence tout le composant horloger 1 selon l'invention présente une rugosité Ra uniforme inférieure ou égale à 0.5 µm ± 20%, de préférence inférieure ou égale à 0.1 µm, de préférence inférieure ou égale à 50 nm, de préférence inférieure ou égale à 25 nm, de préférence inférieure ou égale à 20 nm, de préférence inférieure ou égale à 15 nm, et préférentiellement inférieure ou égale à 12 nm, plus préférentiellement inférieure ou égale à 10 nm, et plus préférentiellement comprise entre 5 nm et 9 nm, bornes incluses. La rugosité Ra est définie selon la norme ISO 4287.

La couche ou les couches de graphène 4 permettent d'augmenter les propriétés tribologiques du composant horloger, notamment en réduisant de façon très drastique le coefficient de frottement. Le composant horloger selon l'invention est donc une pièce lubrifiée à vie.

La couche ou les couches de graphène 4 permettent également d'augmenter les propriétés mécaniques du composant horloger, notamment du fait que le graphène est au minimum 100 fois plus rigide que l'acier et tolère des déformations élastiques extrêmement élevées.

De ce fait, d'une manière particulièrement avantageuse, la partie 2, et de préférence tout le composant horloger 1, selon l'invention présente un coefficient de frottement dynamique très faible, inférieur ou égal à 0.2, de préférence inférieur ou égal à 0.1.

De plus, d'une manière particulièrement avantageuse, la partie 2, et de préférence tout le composant horloger 1, selon l'invention présente une ténacité supérieure ou égale à 6 MPa.m^{1/2} et une résistance à la traction Rm supérieure ou égale à 600 MPa.

D'une manière particulièrement avantageuse, la partie 2, et de préférence tout le composant horloger 1, selon l'invention présente un module de Young supérieur ou égal à 300 GPa.

Le module d'Young, la ténacité et la résistance à la traction sont mesurés et calculés par des essais de traction-compression connus de l'homme du métier.

Outre le fait d'être amagnétique, le carbure de silicium est résistant à la corrosion.

Ainsi, outre le fait d'être amagnétique, au moins la partie 2, et de préférence le composant horloger 1, selon l'invention présente toutes les performances satisfaisantes propres aux composants horlogers pour lesquels on recherche, en surface, une dureté supérieure à 750 HV afin de résister à l'usure, un coefficient de frottement faible pour limiter la lubrification, un état lisse (Ra < 0.5 µm) pour le frottement et l'isochronisme, une résistance à la corrosion, et pour lesquels on recherche un cœur présentant une rigidité, une ténacité et une résistance à la rupture Rm élevées (haute limite élastique).

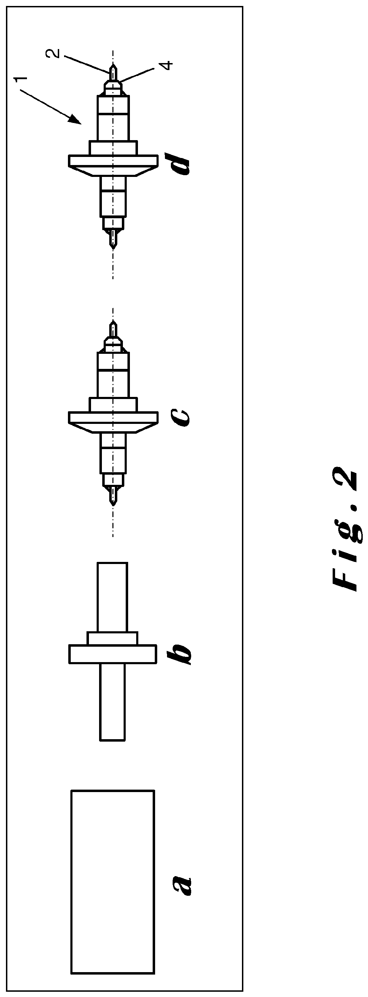

L'invention se rapporte également au procédé de fabrication d'un composant horloger comprenant au moins une partie 2 constituée de carbure de silicium, la surface externe de ladite partie 2 étant recouverte d'au moins une couche de graphène 4, notamment tel que décrit ci-dessus. Le procédé selon l'invention comporte avantageusement les étapes suivantes, décrites en relation avec la figure 2 :
a) une étape de fabrication d'une pièce brute du composant horloger comprenant au moins une partie constituée de carbure de silicium ;
b) une étape de réalisation d'une ébauche du composant horloger comprenant au moins une partie constituée de carbure de silicium au moins par usinage de la pièce brute obtenue à l'étape a) ;
c) une étape de finition par usinage de précision sans force au moins de la partie constituée de carbure de silicium afin d'obtenir au moins une partie constituée de carbure de silicium finie, c'est-à-dire qui présente sa configuration finale en termes de dimensions, de rugosité et de géométrie; et
d) une étape de formation d'au moins une couche de graphène 4 sur la surface externe d'au moins la partie constituée de carbure de silicium finie obtenue à l'étape c) afin d'obtenir le composant horloger 1 selon l'invention.

On considère que la couche de graphène, au vu de son épaisseur, ne modifie pas les dimensions et la géométrie du composant obtenu à l'étape c), ni sa rugosité.

Lorsque le composant horloger est agencé pour former un axe de pivotement, ladite partie 2 constituée de carbure de silicium recouverte d'au moins une couche de graphène 4 est agencée pour former au moins un pivot prévu à au moins une extrémité dudit axe de pivotement.

Avantageusement, ladite partie 2 constituée de carbure de silicium recouverte d'au moins une couche de graphène 4 constitue le composant horloger dans son entier, de sorte que le composant horloger obtenu est en carbure de silicium entièrement couvert d'au moins une couche de graphène 4.

D'une manière avantageuse, l'étape a) est réalisée par des méthodes d'usinage par laser, par jet d'eau ou toute autre méthode d'enlèvement de matière ou par découpe appropriée. De préférence, la pièce brute du composant horloger 1 est constituée entièrement de carbure de silicium à l'exception des inévitables impuretés. Une telle pièce brute est obtenue par exemple à partir de plaquettes en carbure de silicium monocristallin, polycristallin ou sous une autre configuration cristalline quelconque.

D'une manière avantageuse, l'usinage réalisé lors de l'étape b) pour produire les ébauches est un usinage par enlèvement de matière, en utilisant des méthodes semblables à celles de l'étape a). Ces ébauches sont produites si nécessaire avec les cotes nécessaires pour obtenir un composant horloger présentant au final les caractéristiques géométriques recherchées, en tenant compte de toutes les étapes du procédé.

Vient ensuite l'étape c) de reprise et finition du composant horloger par usinage de précision sans force au moins de la partie constituée de carbure de silicium. Cela signifie que l'étape d'usinage de précision sans force c) est avantageusement la dernière étape mise en œuvre sur le composant pour obtenir au moins une partie 2 constituée de carbure de silicium finie et sur la surface externe de laquelle sera ensuite formée au moins une couche de graphène 4 selon l'étape d). Ladite partie 2 constituée de carbure de silicium finie ne nécessite donc plus de la traditionnelle étape de roulage par exemple lorsqu'il s'agit d'axes de pivotement. Cette étape c) permet avantageusement d'obtenir, en une seule et même étape, les mêmes résultats que la combinaison classique de l'étape d'usinage suivie de l'étape de roulage par exemple. De même, aucune autre étape de traitement ultérieure, telle que les traditionnelles étapes de terminaison ou de finition en tant que telles, comme une reprise, un roulage ou un polissage, pour terminer le composant horloger n'est nécessaire après l'étape d).

Dans la présente description, on appelle usinage sans force un usinage non conventionnel selon lequel il n'y a pas d'action mécanique transmise par contact direct et effort entre un outil et la pièce, contrairement à un usinage conventionnel où il existe un contact direct entre l'outil et la pièce et dans lequel d'importantes forces de coupe sont impliquées. Un usinage sans force est donc un usinage sans contact direct entre la pièce à usiner et un outil d'usinage qui serait susceptible d'exercer un effort ou une contrainte sur ladite pièce.

D'une manière avantageuse, l'usinage de précision sans force réalisé lors de l'étape c) est un tournage par femto laser, un tournage électrochimique ECM, ou un tournage par électroérosion (par exemple EDM par fil).

Les opérations d'usinage de cette étape se font avantageusement par micro-usinage au laser pulsé femto seconde avec un laser de longueurs d'onde comprises par exemple entre 200 nm et 2000 nm, de préférence entre 400 nm et 1 000 nm, bornes incluses. Les paramètres du laser peuvent être par exemple : puissance moyenne entre 1 W et 100 W, énergie par pulse entre 20 µJ et 4000 µJ, fréquence entre 100 kHz et 1000 kHz, durée d'impulsion entre 100 fs et 2 ps. Le femto laser attaque la pièce en rotation radialement et non pas normalement, et sans transfert de chaleur.

Grâce à l'usinage de précision sans force par femto laser, cette opération de finition permet d'atteindre des états de surface avec une rugosité Ra uniforme de préférence inférieure ou égale à 100 nm. Plus particulièrement, en jouant sur la dernière profondeur de passe, sur la vitesse de rotation du composant et sur l'oscillation du laser ajoutée à son mouvement primaire par rapport à l'ébauche, il est possible, d'une manière particulièrement avantageuse, d'obtenir à l'issue de l'étape c) au moins la partie constituée de carbure de silicium finie présentant une rugosité Ra uniforme inférieure ou égale à 0.5 µm, et de préférence inférieure ou égale à 0.1 µm, de préférence inférieure ou égale à 50 nm, de préférence inférieure ou égale à 25 nm, de préférence inférieure ou égale à 20 nm, de préférence inférieure ou égale à 15 nm, et préférentiellement inférieure ou égale à 12 nm, plus préférentiellement inférieure ou égale à 10 nm, et plus préférentiellement comprise entre 5 nm et 9 nm, bornes incluses, ce qui permet d'éviter les opérations traditionnelles de finition entre les étapes c) et d) ou après l'étape d), telles que le polissage ou le roulage, nécessitant de déplacer les composants vers une autre machine.

Notamment, pour un usinage de précision sans force par femto laser, on utilise de préférence un spot de diamètre inférieur ou égal à 8 µm, le faisceau laser attaquant le composant horloger en rotation radialement. L'angle du cône du faisceau est de préférence inférieur à 4° et plus préférentiellement inférieur à 2°. D'une manière avantageuse, le système de pilotage du femto laser permet d'amener l'ébauche de façon extrêmement précise à 1 ou 2 µm de la cote finale, le dernier passage du femto laser étant prévu pour atteindre en même temps la cote et la rugosité Ra recherchées.

De plus, l'étape b) est avantageusement mise en œuvre sous soufflage permanent d'air ou d'azote afin d'évacuer la poussière générée par l'usinage. Une aspiration de cette même poussière est localisée face au soufflage.

Ainsi, de manière particulièrement avantageuse, le procédé selon l'invention ne comprend notamment aucune étape de roulage, notamment après l'étape c) ou l'étape d) puisque la partie constituée de carbure de silicium finie obtenue à l'étape c) présente déjà les dimensions, la dureté et la rugosité requises, qui sont traditionnellement obtenues seulement après une opération de roulage.

De préférence, l'étape d) de formation d'au moins une couche de graphène est réalisée par croissance de graphène thermique natif sur la surface du composant, par sublimation du carbure de silicium, de préférence selon un procédé choisi parmi le groupe comprenant un chauffage dans un four sous vide ou sous assistance gazeuse, un chauffage par une source de lumière (lampe infrarouge ou laser infrarouge) dans des enceintes sous vide ou sous assistance gazeuse, ou par toute autre méthode appropriée. La génération de couches multiples de graphène natif peut se faire également par exemple par des procédés faisant appel à l'hydrogène.

Le procédé selon l'invention permet d'obtenir un composant horloger amagnétique présentant des propriétés mécaniques améliorées, notamment la rigidité, capable d'assurer une lubrification à vie, de manière simple et économique. En effet, le procédé selon l'invention permet de supprimer, entre l'étape c) et l'étape d), et/ou après l'étape d) toutes les opérations de roulage ou de polissage traditionnellement utilisées nécessitant un déplacement des composants, de sorte que le nombre d'opérations nécessaires à la fabrication du composant horloger est réduit, le temps de production étant considérablement diminué.

## Revendications

1. Procédé de fabrication d'un composant horloger (1) comprenant au moins une partie (2) constituée de carbure de silicium, la surface externe de ladite partie (2) étant recouverte d'au moins une couche de graphène (4), ledit procédé comprenant:
a) une étape de fabrication d'une pièce brute du composant horloger comprenant au moins une partie constituée de carbure de silicium ;
b) une étape de réalisation d'une ébauche du composant horloger comprenant au moins une partie constituée de carbure de silicium au moins par usinage de la pièce brute obtenue à l'étape a) ;
procédé **caractérisé en ce qu'**il comprend aussi :
c) une étape de finition par usinage de précision sans force au moins de la partie constituée de carbure de silicium afin d'obtenir au moins une partie constituée de carbure de silicium (2) finie; et
d) une étape de formation d'au moins une couche de graphène sur la surface externe d'au moins la partie constituée de carbure de silicium (2) finie obtenue à l'étape c).

2. Procédé selon la revendication 1, **caractérisé en ce que** l'étape a) est réalisée par usinage par enlèvement de matière ou par découpe.

3. Procédé selon l'une des revendications 1 et 2, **caractérisé en ce que** l'usinage réalisé lors de l'étape b) est un usinage par enlèvement de matière.

4. Procédé selon l'une des revendications précédentes, **caractérisé en ce que** l'usinage de précision sans force réalisé lors de l'étape c) est un tournage par femto laser, un tournage électrochimique, ou un tournage par électroérosion.

5. Procédé selon l'une des revendications précédentes, **caractérisé en ce qu'**au moins la partie constituée de carbure de silicium (2) finie obtenue à l'étape c) présente une rugosité Ra inférieure ou égale à 0.5 µm ± 20%, et de préférence inférieure ou égale à 0.1 µm, de préférence inférieure ou égale à 50 nm, de préférence inférieure ou égale à 25 nm, de préférence inférieure ou égale à 20 nm, de préférence inférieure ou égale à 15 nm, et préférentiellement inférieure ou égale à 12 nm, plus préférentiellement inférieure ou égale à 10 nm, et plus préférentiellement comprise entre 5 nm et 9 nm, bornes incluses.

6. Procédé selon l'une des revendications précédentes, **caractérisé en ce qu'**il ne comprend aucune étape de roulage après l'étape c) ou l'étape d).

7. Procédé selon l'une des revendications précédentes, **caractérisé en ce que** l'étape d) de formation d'au moins une couche de graphène (4) est réalisée par croissance de graphène épitaxial natif par sublimation du carbure de silicium selon un procédé choisi parmi le groupe comprenant un chauffage dans un four et un chauffage par une source de lumière.

8. Procédé selon l'une des revendications précédentes, **caractérisé en ce que** la couche de graphène (4) présente une épaisseur comprise entre 0.5 nm et 20 nm, de préférence entre 1 nm et 10 nm, et préférentiellement entre 1 nm et 5 nm.

9. Procédé selon l'une des revendications précédentes, **caractérisé en ce que** le composant horloger est agencé pour former un axe de pivotement, ladite partie (2) constituée de carbure de silicium recouverte d'au moins une couche de graphène (4) de l'axe de pivotement étant agencée pour former au moins un pivot prévu à au moins une extrémité dudit axe de pivotement.

10. Composant horloger (1) comprenant au moins une partie (2) constituée de carbure de silicium, la surface externe de ladite partie (2) étant recouverte d'au moins une couche de graphène (4), susceptible d'être obtenu par le procédé selon l'une des revendications 1 à 9, ladite partie (2) présentant une rugosité Ra inférieure ou égale à 0.5 µm ± 20%, et de préférence inférieure ou égale à 0.1 µm, de préférence inférieure ou égale à 50 nm, de préférence inférieure ou égale à 25 nm, de préférence inférieure ou égale à 15 nm, et préférentiellement inférieure ou égale à 12 nm, plus préférentiellement inférieure ou égale à 10 nm, et plus préférentiellement comprise entre 5 nm et 9 nm, bornes incluses.

11. Composant horloger (1) selon la revendication 10, **caractérisé en ce qu'**il est constitué entièrement de carbure de silicium, et **en ce que** sa surface externe est recouverte d'au moins une couche de graphène (4).

12. Composant horloger (1) selon l'une des revendications 10 à 11, **caractérisé en ce que** le carbure de silicium est monocristallin.

13. Composant horloger (1) selon l'une des revendications 10 à 12, **caractérisé en ce que** la couche de graphène (4) présente une épaisseur comprise entre 0.5 nm et 20 nm, de préférence entre 1 nm et 10 nm, et préférentiellement entre 1 nm et 5 nm.

14. Composant horloger (1) selon l'une des revendications 10 à 13, **caractérisé en ce que** ladite partie (2) présente un diamètre extérieur inférieur à 200 µm, de préférence inférieur à 100 µm, préférentiellement inférieur à 90 µm, et plus préférentiellement inférieur à 70 µm.

15. Composant horloger (1) selon l'une des revendications 10 à 14, **caractérisé en ce qu'**il est agencé pour former un axe de pivotement, de préférence un axe de balancier.

16. Composant horloger (1) selon la revendication 15, **caractérisé en ce que** ladite partie (2) constituée de carbure de silicium recouverte d'au moins une couche de graphène (4) de l'axe de pivotement est agencée pour former un pivot prévu à au moins une extrémité dudit axe de pivotement.

17. Mouvement horloger comprenant un composant horloger (1) selon l'une des revendications 10 à 16.

18. Pièce d'horlogerie comprenant un mouvement horloger selon la revendication 17 ou un composant horloger (1) selon l'une des revendications 10 à 16.

## Patentansprüche

1. Verfahren zur Herstellung einer Uhrkomponente (1), die mindestens ein aus Siliziumkarbid bestehendes Teil (2) umfasst, wobei die Aussenfläche des besagten Teils (2) mit mindestens einer Graphenschicht (4) überzogen ist, wobei das besagte Verfahren umfasst:
a) einen Schritt zur Herstellung eines Rohstücks der Uhrkomponente, die mindestens ein aus Siliziumkarbid bestehendes Teil umfasst;
b) einen Schritt zur Fertigung eines Rohformlings der Uhrkomponente, die mindestens ein aus Siliziumkarbid bestehendes Teil umfasst, mindestens durch Bearbeitung des in Schritt a) erhaltenen Rohstücks;
das Verfahren **dadurch gekennzeichnet ist, dass** es ebenfalls umfasst:
c) einen Schritt zur Endbearbeitung durch Präzisionsbearbeitung ohne Krafteinwirkung mindestens des aus Siliziumkarbid bestehenden Teils, um mindestens ein fertiges aus Siliziumkarbid bestehendes Teil (2) zu erhalten; und
d) einen Schritt zur Bildung mindestens einer Graphenschicht auf der Aussenfläche mindestens des fertigen aus Siliziumkarbid bestehenden Teils (2), das in Schritt c) erhalten wurde.

2. Verfahren nach Anspruch 1, **dadurch gekennzeichnet, dass** der Schritt a) durch Bearbeitung durch Materialabtrag oder durch Schneiden ausgeführt wird.

3. Verfahren nach einem der Ansprüche 1 und 2, **dadurch gekennzeichnet, dass** die während des Schritts b) ausgeführte Bearbeitung eine Bearbeitung durch Materialabtrag ist.

4. Verfahren nach einem der vorstehenden Ansprüche, **dadurch gekennzeichnet, dass** die während des Schritts c) ausgeführte Präzisionsbearbeitung ohne Krafteinwirkung ein Drehen durch Femto-Laser, elektrochemisches Drehen oder Drehen durch Elektroerosion ist.

5. Verfahren nach einem der vorstehenden Ansprüche, **dadurch gekennzeichnet, dass** mindestens das fertige aus Siliziumkarbid bestehende Teil (2), das in Schritt c) erhalten wurde, eine Rauheit Ra von weniger oder gleich 0,5 µm ± 20 %, und vorzugsweise von weniger oder gleich 0,1 µm, vorzugsweise von weniger oder gleich 50 nm, vorzugsweise von weniger oder gleich 25 nm, vorzugsweise von weniger oder gleich 20 nm, vorzugsweise von weniger oder gleich 15 nm, und bevorzugt von weniger oder gleich 12 nm, noch bevorzugter von weniger oder gleich 10 nm, und noch bevorzugter zwischen einschliesslich 5 nm und einschliesslich 9 nm aufweist.

6. Verfahren nach einem der vorstehenden Ansprüche, **dadurch gekennzeichnet, dass** es keinen Schritt zum Rollieren nach dem Schritt c) oder dem Schritt d) umfasst.

7. Verfahren nach einem der vorstehenden Ansprüche, **dadurch gekennzeichnet, dass** der Schritt d) zur Bildung mindestens einer Graphenschicht (4) durch Wachstum von nativem epitaktischem Graphen durch Sublimation von Siliziumkarbid nach einem Verfahren ausgeführt wird, das aus der Gruppe, die Erhitzen in einem Ofen und Erhitzen durch eine Lichtquelle umfasst, ausgewählt ist.

8. Verfahren nach einem der vorstehenden Ansprüche, **dadurch gekennzeichnet, dass** die Graphenschicht (4) eine Dicke zwischen 0,5 nm und 20 nm, vorzugsweise zwischen 1 nm und 10 nm, und bevorzugt zwischen 1 nm und 5 nm aufweist.

9. Verfahren nach einem der vorstehenden Ansprüche, **dadurch gekennzeichnet, dass** die Uhrkomponente ausgelegt ist, um eine Drehachse zu bilden, wobei das besagte aus Siliziumkarbid bestehende, mit mindestens einer Graphenschicht (4) überzogene Teil (2) der Drehachse ausgelegt ist, um mindestens einen an mindestens einem Ende der besagten Drehachse vorgesehenen Zapfen zu bilden.

10. Uhrkomponente (1), die mindestens ein aus Siliziumkarbid bestehendes Teil (2), wobei die Aussenfläche des besagten Teils (2) mit mindestens einer Graphenschicht (4) überzogen ist, umfasst, die durch das Verfahren nach einem der Ansprüche 1 bis 9 erhalten werden kann, wobei das besagte Teil (2) eine Rauheit Ra von weniger oder gleich 0,5 µm ± 20 %, und vorzugsweise von weniger oder gleich 0,1 µm, vorzugsweise von weniger oder gleich 50 nm, vorzugsweise von weniger oder gleich 25 nm, vorzugsweise von weniger oder gleich 15 nm, und bevorzugt von weniger oder gleich 12 nm, noch bevorzugter von weniger oder gleich 10 nm, und noch bevorzugter zwischen einschliesslich 5 nm und einschliesslich 9 nm aufweist.

11. Uhrkomponente (1) nach Anspruch 10, **dadurch gekennzeichnet, dass** sie vollständig aus Siliziumkarbid besteht, und dadurch, dass ihre Aussenfläche mit mindestens einer Graphenschicht (4) überzogen ist.

12. Uhrkomponente (1) nach einem der Ansprüche 10 bis 11, **dadurch gekennzeichnet, dass** das Siliziumkarbid monokristallin ist.

13. Uhrkomponente (1) nach einem der Ansprüche 10 bis 12, **dadurch gekennzeichnet, dass** die Graphenschicht (4) eine Dicke zwischen 0,5 nm und 20 nm, vorzugsweise zwischen 1 nm und 10 nm, und bevorzugt zwischen 1 nm und 5 nm aufweist.

14. Uhrkomponente (1) nach einem der Ansprüche 10 bis 13, **dadurch gekennzeichnet, dass** das besagte Teil (2) einen Aussendurchmesser von weniger als 200 µm, vorzugsweise von weniger als 100 µm, bevorzugt von weniger als 90 µm, und noch bevorzugter von weniger als 70 µm aufweist.

15. Uhrkomponente (1) nach einem der Ansprüche 10 bis 14, **dadurch gekennzeichnet, dass** sie ausgelegt ist, um eine Drehachse, vorzugsweise eine Unruhachse, zu bilden.

16. Uhrkomponente (1) nach Anspruch 15, **dadurch gekennzeichnet, dass** das besagte aus Siliziumkarbid bestehende, mit mindestens einer Graphenschicht (4) überzogene Teil (2) der Drehachse ausgelegt ist, um einen an mindestens einem Ende der besagten Drehachse vorgesehenen Zapfen zu bilden.

17. Uhrwerk, das eine Uhrkomponente (1) nach einem der Ansprüche 10 bis 16 umfasst.

18. Uhr, die ein Uhrwerk nach Anspruch 17 oder eine Uhrkomponente (1) nach einem der Ansprüche 10 bis 16 umfasst.

## Claims

1. A method for manufacturing a timepiece component (1) comprising at least one part (2) consisting of silicon carbide, the outer surface of said part (2) being covered with at least one graphene layer (4), said method comprising:
a) a step of manufacturing a raw piece of the timepiece component comprising at least one part consisting of silicon carbide;
b) a step of producing a blank of the timepiece component comprising at least one part consisting of silicon carbide at least by machining the raw piece obtained in step a);
the method **characterised in that** it also comprises:
c) a step of finishing at least the part consisting of silicon carbide by precision machining without force in order to obtain at least one finished part consisting of silicon carbide (2); and
d) a step of forming at least one graphene layer on the outer surface of at least the finished part consisting of silicon carbide (2) obtained in step c) .

2. The method according to Claim 1, **characterised in that** the step a) is carried out by machining by removing material or by cutting.

3. The method according to any one of Claims 1 and 2, **characterised in that** the machining carried out during step b) is machining by removing material.

4. The method according to any one of the preceding claims, **characterised in that** the precision machining without force carried out during step c) is femtosecond laser turning, electrochemical turning, or electrical discharge turning.

5. The method according to any one of the preceding claims, **characterised in that** at least the finished part consisting of silicon carbide (2) obtained in step c) has a roughness Ra less than or equal to 0.5 µm ± 20%, and preferably less than or equal to 0.1 µm, preferably less than or equal to 50 nm, preferably less than or equal to 25 nm, preferably less than or equal to 20 nm, preferably less than or equal to 15 nm, and preferably less than or equal to 12 nm, more preferably less than or equal to 10 nm, and more preferably between 5 nm and 9 nm, inclusive.

6. The method according to any one of the preceding claims, **characterised in that** it does not comprise any rolling step after step c) or step d).

7. The method according to any one of the preceding claims, **characterised in that** the step d) of forming at least one graphene layer (4) is carried out by growth of native epitaxial graphene by sublimation of the silicon carbide according to a method selected from the group comprising heating in an oven and heating by a light source.

8. The method according to any one of the preceding claims, **characterised in that** the graphene layer (4) has a thickness between 0.5 nm and 20 nm, preferably between 1 nm and 10 nm, and preferably between 1 nm and 5 nm.

9. The method according to any one of the preceding claims, **characterised in that** the timepiece component is arranged to form a pivot axis, said part (2) consisting of silicon carbide covered with at least one graphene layer (4) of the pivot axis being arranged to form at least one pivot provided at one end, at least, of said pivot axis.

10. A timepiece component (1) comprising at least one part (2) consisting of silicon carbide, the outer surface of said part (2) being covered with at least one graphene layer (4), obtainable by the method according to any one of Claims 1 to 9, said part (2) having a roughness Ra less than or equal to 0.5 µm ± 20%, and preferably less than or equal to 0.1 µm, preferably less than or equal to 50 nm, preferably less than or equal to 25 nm, preferably less than or equal to 15 nm, and preferably less than or equal to 12 nm, more preferably less than or equal to 10 nm, and more preferably between 5 nm and 9 nm, inclusive.

11. The timepiece component (1) according to Claim 10, **characterised in that** it consists entirely of silicon carbide, and **in that** its outer surface is covered with at least one graphene layer (4).

12. The timepiece component (1) according to any one of Claims 10 to 11, **characterised in that** the silicon carbide is monocrystalline.

13. The timepiece component (1) according to any one of Claims 10 to 12, **characterised in that** the graphene layer (4) has a thickness between 0.5 nm and 20 nm, preferably between 1 nm and 10 nm, and preferably between 1 nm and 5 nm.

14. The timepiece component (1) according to any one of Claims 10 to 13, **characterised in that** said part (2) has an outside diameter less than 200 µm, preferably less than 100 µm, preferably less than 90 µm, and more preferably less than 70 µm.

15. The timepiece component (1) according to any one of Claims 10 to 14, **characterised in that** it is arranged to form a pivot axis, preferably a balance axis.

16. The timepiece component (1) according to Claim 15, **characterised in that** said part (2) consisting of silicon carbide covered with at least one graphene layer (4) of the pivot axis is arranged to form a pivot provided at one end, at least, of said pivot axis.

17. A watch movement comprising a timepiece component (1) according to any one of Claims 10 to 16.

18. A timepiece comprising a watch movement according to Claim 17 or a timepiece component (1) according to any one of Claims 10 to 16.
